# EUROPEAN PATENT APPLICATION

(11) **EP 4 625 201 A1**
(43) Date of publication of application: **01.10.2025**
(21) Application number: 23909383.4
(22) Date of filing: 21.09.2023
(51) Int. Cl.: G06F 16/33, G06F 16/31, G06F 21/64

(54) **DATA IDENTIFICATION METHOD AND APPARATUS, AND COMPUTING DEVICE**

(30) Priority: 29.12.2022 CN 202211728135
(71) Applicant: Huawei Cloud Computing Technologies Co., Ltd., Guiyang, Guizhou 550025 (CN)
(72) Inventor: ZHUO, Zhongliu, Guiyang, Guizhou 550025 (CN); ZHU, Tao, Guiyang, Guizhou 550025 (CN); WANG, Zhonggang, Guiyang, Guizhou 550025 (CN)
(74) Representative: Pfenning, Meinig & Partner mbB
(86) International application number: PCT/CN2023/120349
(87) International publication number: WO 2024/139448

(57) **Abstract**

A data identification method and apparatus, and a computing device are provided. The method is applied to a cloud management platform. The method includes: The cloud management platform obtains to-be-scanned data; queries the to-be-scanned data based on a first trie tree, to determine a first string; determines a first regular expression from a target regular expression group based on the first string and a first mapping relationship; and scans the to-be-scanned data according to the first regular expression, to identify target data in the to-be-scanned data. According to the method, a speed and efficiency of identifying the target data can be improved without compromising target data matching accuracy.

## Description

This application claims priority to Chinese Patent Application No. 202211728135.0, filed with the China National Intellectual Property Administration on December 29, 2022 and entitled "DATA IDENTIFICATION METHOD AND APPARATUS, AND COMPUTING DEVICE", which is incorporated herein by reference in its entirety.

### TECHNICAL FIELD

This application relates to the field of cloud computing, and more specifically, to a data identification method and apparatus, and a computing device.

### BACKGROUND

In recent years, data security has attracted great attention from countries around the world. Each country has issued data security-related regulations and standards to regulate collection and processing of user data by enterprises. As an increasing quantity of enterprise services are migrated to a "cloud", in a cloud computing scenario, massive data of the enterprises faces many threats and challenges, for example, data theft, tampering, and forgery, due to diversity and complexity of an application environment of the data. After the data security protection regulations are released, how to help the enterprises quickly identify the target data in complex service environments and better process and protect the target data becomes a great challenge currently faced.

In a related technical solution, scanning and identification are performed on to-be-scanned data sequentially according to a plurality of regular expressions included in a regular expression group, to find target data. In this technical solution, the plurality of regular expressions included in the regular expression group need to be used to perform scanning and matching on the to-be-scanned data one by one. As a result, a speed and efficiency of identifying the target data in the to-be-scanned data are low.

Therefore, how to improve the speed and efficiency of identifying the target data in the to-be-scanned data without compromising target data matching accuracy becomes an urgent technical problem to be resolved.

### SUMMARY

This application provides a data identification method and apparatus, and a computing device. According to the method, a speed and efficiency of identifying target data can be improved without compromising target data matching accuracy.

According to a first aspect, a data identification method is provided. The method is applied to a cloud management platform. The method includes: The cloud management platform obtains to-be-scanned data, queries the to-be-scanned data based on a first trie tree, to determine a first string, determines a first regular expression from a target regular expression group based on the first string and a first mapping relationship, and scans the to-be-scanned data according to the first regular expression, to identify target data in the to-be-scanned data.

In the foregoing technical solution, a plurality of regular expressions included in a regular expression group are filtered based on a trie tree to obtain a part of matched regular expressions, so that scanning and identification are performed on the to-be-scanned data according to the part of regular expressions obtained through filtering, to find the target data. Therefore, a speed and efficiency of identifying the target data in the to-be-scanned data can be improved without compromising target data matching accuracy.

With reference to the first aspect, in some implementations of the first aspect, before the cloud management platform determines the first regular expression from the target regular expression group based on the first string and the first mapping relationship, the method further includes: The cloud management platform determines the target regular expression group based on the first trie tree and a second mapping relationship, where the second mapping relationship includes a mapping relationship between the first trie tree and the target regular expression group.

With reference to the first aspect, in some implementations of the first aspect, the method further includes: The cloud management platform determines the target regular expression group based on the to-be-scanned data; and the cloud management platform establishes the first trie tree corresponding to the target regular expression group.

With reference to the first aspect, in some implementations of the first aspect, the target regular expression group includes the first regular expression. The cloud management platform automatically extracts a string in the first regular expression, where the string in the first regular expression includes the first string; and the cloud management platform establishes the first trie tree based on the string in the first regular expression.

With reference to the first aspect, in some implementations of the first aspect, the cloud management platform establishes a first automaton transition diagram corresponding to the first regular expression; and the cloud management platform automatically extracts the string in the first regular expression based on the first automaton transition diagram.

With reference to the first aspect, in some implementations of the first aspect, the method further includes: The cloud management platform establishes the first mapping relationship between the first string and the first regular expression.

With reference to the first aspect, in some implementations of the first aspect, the method further includes: The cloud management platform establishes the second mapping relationship between the first trie tree and the target regular expression group.

With reference to the first aspect, in some implementations of the first aspect, the target regular expression group further includes a second regular expression. The cloud management platform automatically extracts a string in the second regular expression, where the string in the second regular expression includes a second string; and the cloud management platform establishes the first trie tree based on the string in the second regular expression.

With reference to the first aspect, in some implementations of the first aspect, the method further includes: The cloud management platform establishes a third mapping relationship between the second string and the second regular expression.

With reference to the first aspect, in some implementations of the first aspect, the cloud management platform receives a user instruction, where the user instruction indicates the target regular expression group selected for the to-be-scanned data.

According to a second aspect, a data identification apparatus is provided. The apparatus is used in a cloud management platform, and includes an obtaining module, a determining module, and an identification module, where the obtaining module is configured to obtain to-be-scanned data; the determining module is configured to: query the to-be-scanned data based on a first trie tree, to determine a first string, and determine a first regular expression from a target regular expression group based on the first string and a first mapping relationship; the identification module is configured to scan the to-be-scanned data according to the first regular expression, to identify target data in the to-be-scanned data; and the first trie tree and the to-be-scanned data include the first string, the first trie tree corresponds to the target regular expression group, the target regular expression group includes a plurality of regular expressions, the first mapping relationship includes a mapping relationship between the first string and the first mapping relationship, and the first regular expression is one of the plurality of regular expressions.

With reference to the second aspect, in some implementations of the second aspect, the determining module is further configured to determine the target regular expression group based on the first trie tree and a second mapping relationship, where the second mapping relationship includes a mapping relationship between the first trie tree and the target regular expression group.

With reference to the second aspect, in some implementations of the second aspect, the determining module is further configured to: determine the target regular expression group based on the to-be-scanned data; and establish the first trie tree corresponding to the target regular expression group.

With reference to the second aspect, in some implementations of the second aspect, the target regular expression group includes the first regular expression, and the determining module is specifically configured to: automatically extract a string in the first regular expression, where the string in the first regular expression includes the first string; and establish the first trie tree based on the string in the first regular expression.

With reference to the second aspect, in some implementations of the second aspect, the determining module is specifically configured to: establish a first automaton transition diagram corresponding to the first regular expression; and automatically extract the string in the first regular expression based on the first automaton transition diagram.

With reference to the second aspect, in some implementations of the second aspect, the determining module is further configured to establish the first mapping relationship between the first string and the first regular expression.

With reference to the second aspect, in some implementations of the second aspect, the determining module is further configured to establish the second mapping relationship between the first trie tree and the target regular expression group.

With reference to the second aspect, in some implementations of the second aspect, the target regular expression group further includes a second regular expression, and the determining module is specifically configured to: automatically extract a string in the second regular expression, where the string in the second regular expression includes a second string; and establish the first trie tree based on the string in the second regular expression.

With reference to the second aspect, in some implementations of the second aspect, the determining module is further configured to establish a third mapping relationship between the second string and the second regular expression.

With reference to the second aspect, in some implementations of the second aspect, the obtaining module is specifically configured to receive a user instruction, where the user instruction indicates the target regular expression group selected for the to-be-scanned data.

According to a third aspect, a computing device is provided, including a processor and a storage, and optionally, further including an input/output interface. The processor is configured to control the input/output interface to send and receive information. The storage is configured to store a computer program. The processor is configured to: invoke the computer program from the storage and run the computer program, so that the method according to any one of the first aspect or the possible implementations of the first aspect is performed.

Optionally, the processor may be a general-purpose processor, and may be implemented by hardware or software. When the processor is implemented by hardware, the processor may be a logic circuit, an integrated circuit, or the like. When the processor is implemented by software, the processor may be a general-purpose processor, and is implemented by reading software code stored in the storage. The storage may be integrated into the processor, or may be located outside the processor and exist independently.

According to a fourth aspect, a computing device cluster is provided, including at least one computing device. Each computing device includes a processor and a storage. The processor of the at least one computing device is configured to execute instructions stored in the storage of the at least one computing device, to enable the computing device cluster to perform the method according to any one of the first aspect or the possible implementations of the first aspect.

According to a fifth aspect, a chip is provided. The chip obtains instructions and executes the instructions to implement the method according to any one of the first aspect or the implementations of the first aspect.

Optionally, in an implementation, the chip includes a processor and a data interface. The processor reads, through the data interface, instructions stored in a storage, to perform the method according to any one of the first aspect or the implementations of the first aspect.

Optionally, in an implementation, the processor may further include the storage. The storage stores the instructions, and the processor is configured to execute the instructions stored in the storages. When the instructions are executed, the processor is configured to perform the method according to any one of the first aspect or the implementations of the first aspect.

According to a sixth aspect, a computer program product including instructions is provided. When the instructions are run by a computing device, the computing device is enabled to perform the method according to any one of the first aspect or the implementations of the first aspect.

According to a seventh aspect, a computer program product including instructions is provided. When the instructions are run by a computing device cluster, the computing device cluster is enabled to perform the method according to any one of the first aspect or the implementations of the first aspect.

According to an eighth aspect, a computer-readable storage medium is provided, including computer program instructions. When the computer program instructions are executed by a computing device, the computing device performs the method according to any one of the first aspect or the implementations of the first aspect.

For example, the computer-readable storage includes but is not limited to one or more of the following: a read-only memory (read-only memory, ROM), a programmable ROM (programmable ROM, PROM), an erasable PROM (erasable PROM, EPROM), a flash memory, an electrically EPROM (electrically EPROM, EEPROM), and a hard drive (hard drive).

Optionally, in an implementation, the foregoing storage medium may be specifically a nonvolatile storage medium.

According to a ninth aspect, a computer-readable storage medium is provided, including computer program instructions. When the computer program instructions are executed by a computing device cluster, the computing device cluster performs the method according to any one of the first aspect or the implementations of the first aspect.

For example, the computer-readable storage medium includes but is not limited to one or more of the following: a read-only memory (read-only memory, ROM), a programmable ROM (programmable ROM, PROM), an erasable PROM (erasable PROM, EPROM), a flash memory, an electrically EPROM (electrically EPROM, EEPROM), and a hard drive (hard drive).

Optionally, in an implementation, the foregoing storage medium may be specifically a nonvolatile storage medium.

### BRIEF DESCRIPTION OF DRAWINGS

FIG. 1 is a block diagram of a cloud scenario applicable to an embodiment of this application;
FIG. 2 is a schematic flowchart of a method for generating a trie tree corresponding to a regular expression group according to an embodiment of this application;
FIG. 3 is a diagram of classification into regular expression groups according to an embodiment of this application;
FIG. 4 is a diagram of a UI interface according to an embodiment of this application;
FIG. 5 is a diagram of an automaton transition diagram corresponding to a regular expression 1 according to an embodiment of this application;
FIG. 6 is a diagram of an automaton transition diagram corresponding to a regular expression 2 according to an embodiment of this application;
FIG. 7 is a schematic flowchart of a data identification method according to an embodiment of this application;
FIG. 8 is a block diagram of a data identification apparatus 400 according to an embodiment of this application;
FIG. 9 is a diagram of an architecture of a computing device 1500 according to an embodiment of this application;
FIG. 10 is a diagram of an architecture of a computing device cluster according to an embodiment of this application; and
FIG. 11 is a diagram of a connection between computing devices 1500A and 1500B through a network according to an embodiment of this application.

### DESCRIPTION OF EMBODIMENTS

The following describes technical solutions of this application with reference to accompanying drawings.

Each aspect, embodiment, or feature is presented in this application with reference to a system including a plurality of devices, components, modules, and the like. It should be understood that each system may include another device, component, module, and the like, and/or may not include all devices, components, modules, and the like discussed with reference to the accompanying drawings. In addition, a combination of these solutions may also be used.

Moreover, in embodiments of this application, terms such as "example" and "for example" indicate giving an example, an illustration, or a description. Any embodiment or design scheme described as an "example" in this application should not be explained as being more preferred or having more advantages than another embodiment or design scheme. To be precise, use of the term "example" is intended to present a concept in a specific manner.

In embodiments of this application, "relevant (corresponding, relevant)" and "corresponding (corresponding)" may sometimes be interchangeably used. It should be noted that meanings expressed by the terms are consistent when a difference between the terms is not emphasized.

A service scenario described in embodiments of this application is intended to describe the technical solutions in embodiments of this application more clearly, and do not constitute a limitation on the technical solutions provided in embodiments of this application. A person of ordinary skill in the art may learn that, with evolution of a network architecture and emergence of new service scenarios, the technical solutions provided in embodiments of this application are also applicable to similar technical problems.

Reference to "an embodiment", "some embodiments", or the like described in this specification indicates that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean reference to a same embodiment. Instead, the statements mean "one or more but not all of embodiments", unless otherwise specifically emphasized in another manner. The terms "include", "have", and variants thereof all mean "include but are not limited to", unless otherwise specifically emphasized in another manner.

In this application, "at least one" means one or more, and "a plurality of" means two or more. The term "and/or" describes an association relationship between associated objects, and indicates that three relationships may exist. For example, A and/or B may indicate the following cases: Only A exists, both A and B exist, and only B exists, where A and B may be singular or plural. The character "/" generally indicates an "or" relationship between the associated objects. "At least one of the following items (pieces)" or a similar expression thereof means any combination of these items, including any combination of singular item (piece) or plural items (pieces). For example, at least one item (piece) of a, b, or c may indicate: a, b, c, a and b, a and c, b and c, or a, b, and c, where a, b, and c may be singular or plural.

In recent years, data security has attracted great attention from countries around the world. Each country has issued data security-related regulations and standards to regulate collection and processing of user data by enterprises. As an increasing quantity of enterprise services are migrated to a "cloud", massive data of the enterprises faces many threats and challenges, for example, data theft, tampering, and forgery, in a cloud computing scenario due to diversity and complexity of an application environment of the data.

During actual service application of the enterprises, a part of target data (for example, sensitive data related to user privacy and the like) in the massive data is scattered in different locations of a system due to transmission and movement. After the data security protection regulations are released, how to help the enterprises quickly identify the target data in complex service environments and better process and protect the target data becomes a great challenge currently faced.

In a related technical solution, identification is performed on massive data (to-be-scanned data) according to a regular expression, to find target data that satisfies the regular expression. Specifically, a corresponding regular expression group may be usually selected based on a field to which the to-be-scanned data belongs. Each regular expression group may include N preset or user-defined regular expressions, and scanning and identification are performed on the to-be-scanned data according to the N regular expressions, to find the target data.

In the related technical solution, the N regular expressions included in the regular expression group need to be used to perform scanning and matching on the to-be-scanned data one by one. As a result, a speed and efficiency of identifying the target data in the to-be-scanned data are low.

In view of this, embodiments of this application provide a data identification method. A plurality of regular expressions included in a regular expression group are filtered based on a trie tree to obtain a part of matched regular expressions, so that scanning and identification are performed on to-be-scanned data according to the part of regular expressions obtained through filtering, to find target data. Therefore, a speed and efficiency of identifying the target data in the to-be-scanned data is improved.

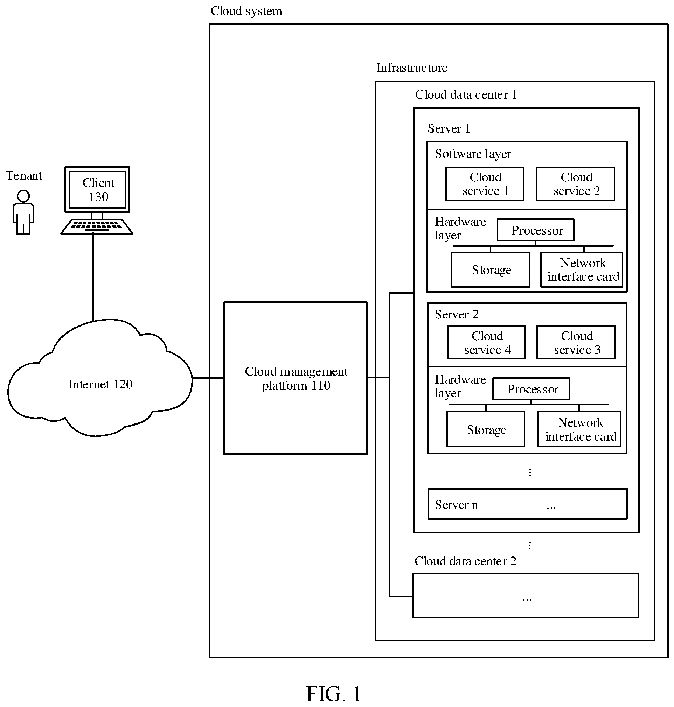

In a possible implementation, the method provided in this embodiment of this application may be applied to a cloud service scenario, and a cloud management platform in the cloud service scenario performs the method. For ease of description, the following first describes the cloud service scenario in detail with reference to FIG. 1.

FIG. 1 is a block diagram of a cloud scenario applicable to an embodiment of this application. As shown in FIG. 1, the cloud scenario may include a cloud management platform 110, an Internet 120, and a client 130.

As shown in FIG. 1, the cloud management platform 110 is configured to manage an infrastructure that provides a plurality of cloud services. The infrastructure includes a plurality of cloud data centers, each cloud data center includes a plurality of servers, and each server includes a cloud service resource to provide a corresponding cloud service for a tenant.

The cloud management platform 110 may be located in the cloud data center, and may provide an access interface (for example, an interface or an application programming interface (application programming interface, API)). The tenant may operate the client 130 to remotely access the access interface, to register a cloud account and a password on the cloud management platform 110 and log in to the cloud management platform 110. After the cloud management platform 110 successfully authenticates the cloud account and the password, the tenant may further pay on the cloud management platform 110 to select and purchase a virtual machine with a specific specification (a processor, a memory, or a disk). After the payment for purchase succeeds, the cloud management platform 110 provides a remote login account and password of the purchased virtual machine, and the client 130 may remotely log in to the virtual machine, and install and run an application of the tenant in the virtual machine. Therefore, the tenant may create, manage, log in to, and operate the virtual machine in the cloud data center by using the cloud management platform 110. The virtual machine may also be referred to as a cloud server (elastic compute service, ECS) or an elastic instance (different cloud service providers have different names).

It should be understood that a tenant of a cloud service may be an individual, an enterprise, a school, a hospital, an administrative agency, or the like.

Functions of the cloud management platform 110 include but are not limited to a user console, a computing management service, a network management service, a storage management service, an authentication service, and an image management service. The user console provides an interface or an API to interact with the tenant. The computing management service is used to manage servers running a virtual machine and a container and a bare metal server. The network management service is used to manage network services (for example, a gateway and a firewall). The storage management service is used to manage storage services (for example, a data bucket service). The authentication service is used to manage a tenant account and password. The image management service is used to manage a virtual machine image. The tenant may use the client 130 to log in to the cloud management platform 110 through the Internet 120 to manage a rented cloud service.

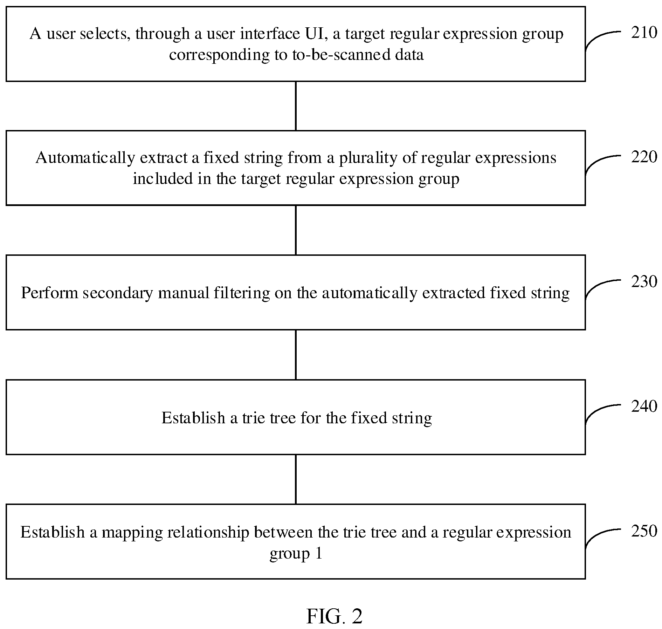

With reference to FIG. 2, the following first describes in detail a method for generating a trie tree corresponding to a regular expression group according to an embodiment of this application. It should be understood that an example in FIG. 2 is merely intended to help a person skilled in the art understand embodiments of this application, instead of limiting embodiments of this application to a specific value or a specific scenario of the example shown in FIG. 2. It is clear that a person skilled in the art may make various equivalent modifications or changes based on the following example provided in FIG. 2, and such modifications and changes also fall within the scope of embodiments of this application.

FIG. 2 is a schematic flowchart of a method for generating a trie tree corresponding to a regular expression group according to an embodiment of this application. As shown in FIG. 2, the method may include steps 210 to 250. The following separately describes steps 210 to 250 in detail.

Step 210: A user selects, through a user interface (user interface, UI), a target regular expression group corresponding to to-be-scanned data.

It should be understood that a plurality of regular expressions form different regular expression groups based on classification of laws and regulations. During scanning of the to-be-scanned data according to the regular expression, the user may usually select, based on a field to which the to-be-scanned data belongs, a target regular expression group based on a specific law and regulation.

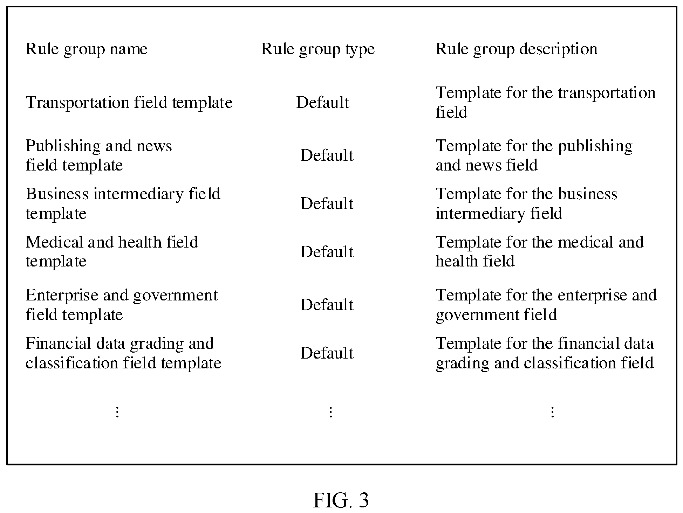

For example, FIG. 3 shows possible classification into regular expression groups (which may also be referred to as rule groups). For example, the regular expression groups may include a transportation field template, a publishing and news field template, a medical and health field template, and the like. During scanning of the to-be-scanned data, the user may select the corresponding target regular expression group through the UI interface based on the field to which the to-be-scanned data belongs.

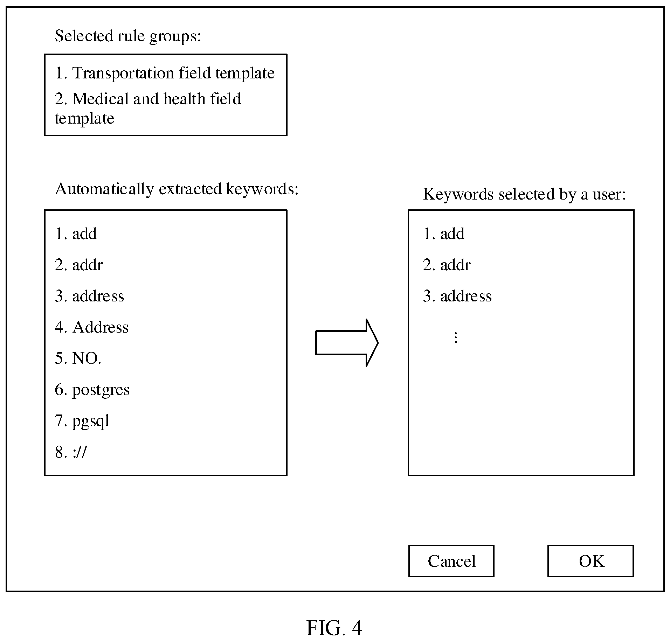

It should be further understood that there may be one or more target regular expression groups selected by the user through the UI interface. This is not specifically limited in this embodiment of this application. For example, on a UI shown in FIG. 4, "Selected regular expression groups" indicates target regular expression groups selected by the user for the to-be-scanned data. For example, "Selected regular expression groups" includes a regular expression group of the transportation field template and a regular expression group of the medical and health field template.

Step 220: Automatically extract a fixed string from a plurality of regular expressions included in the target regular expression group.

In this embodiment of this application, a fixed string (which may also be referred to as a keyword) may be automatically extracted from each of a plurality of regular expressions included in each of the selected regular expression groups.

For example, the following describes in detail, by using one regular expression group, such as the regular expression group of the medical and health field template (which is briefly referred to as a regular expression group 1), as an example, a specific implementation process of automatically extracting a fixed string from each of a plurality of regular expressions included in the regular expression group. For automatically extracting a fixed string from each of a plurality of regular expressions included in the regular expression group of the transportation field template in the selected regular expression groups, refer to the following process.

In a possible implementation, the regular expression group 1 includes n regular expressions. In this embodiment of this application, the n regular expressions included in the regular expression group 1 may be numbered, for example, 1, 2, 3, ..., and n.

In this embodiment of this application, the fixed string (which may also be referred to as the keyword) in each regular expression may be automatically extracted according to an automated keyword extraction algorithm, and a mapping relationship between the fixed string in each regular expression and a number of the regular expression may be established.

For ease of description, the following describes in detail, by using an example in which the regular expression group 1 includes two regular expressions (a regular expression 1 and a regular expression 2), the implementation process of automatically extracting the fixed string in each regular expression.

In an example, the regular expression 1 numbered 1 is "(add|addr|address|Address)NO\.\d+". In this embodiment of this application, the regular expression 1 may be converted into an automaton transition diagram by using a regular compilation engine, the automaton transition diagram may be traversed, and a pure string-type node in the automaton transition diagram may be used as a fixed string (which may also be referred to as a string or a keyword). In a possible implementation, a Java regular compilation engine is used as an example. A Pattern class in Java is modified, and a traversal function is added, to traverse the automaton transition diagram from a start to an end. During traversal, a node type may be determined. If a node is a node that includes a pure string, the string in the node may be used as the fixed string (which may also be referred to as the string or the keyword).

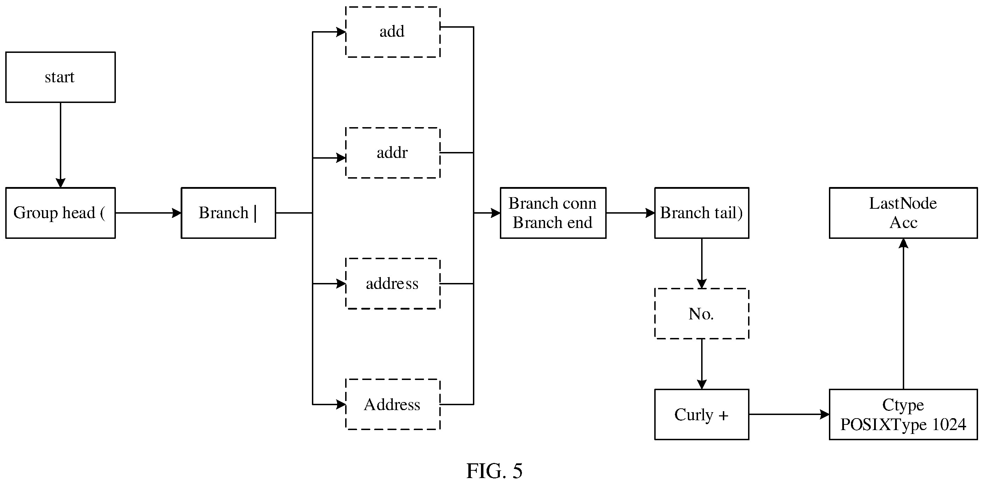

For example, in this application, the regular expression 1 is converted into an automaton transition diagram shown in FIG. 5. Refer to FIG. 5. The automaton transition diagram is traversed. Nodes marked by dashed lines are pure string-type nodes. Therefore, the nodes may be used as fixed strings (which may also be referred to as keywords). For example, automatically extracted keywords in the regular expression 1 include "add", "addr", "address", "Address", and "NO.".

Optionally, in some embodiments, in this embodiment of this application, a logical relationship between the keywords in the regular expression 1 may be further determined based on the automaton transition diagram shown in FIG. 5. For example, as shown in FIG. 5, keywords between a branch node and a branch end node may be determined as being in an "OR" logical relationship, and other keywords may be determined as being in an "AND" logical relationship. For example, the following keywords in FIG. 5 may be determined as being in the "OR" logical relationship: "add", "addr", "address", and "Address". For another example, the following keywords in FIG. 5 may be determined as being in the "AND" logical relationship: "add" and "NO."; "addr" and "NO."; "address" and "NO."; "Address" and "NO."; and "add" and "NO.".

In this embodiment of this application, a mapping relationship between each keyword in the regular expression 1 and the number of the regular expression 1 may be further established. For example, established mapping relationships include {"add", 1}, {"addr", 1}, {"address", 1}, {"Address", 1}, and {"NO.", 1}.

In another example, the regular expression 2 numbered 2 is " (?:postgres|pgsql)\:VV". In this embodiment of this application, an automaton transition diagram may be established for the regular expression 2, the automaton transition diagram may be traversed, and a pure string-type node in the automaton transition diagram may be used as a fixed string (which may also be referred to as a keyword).

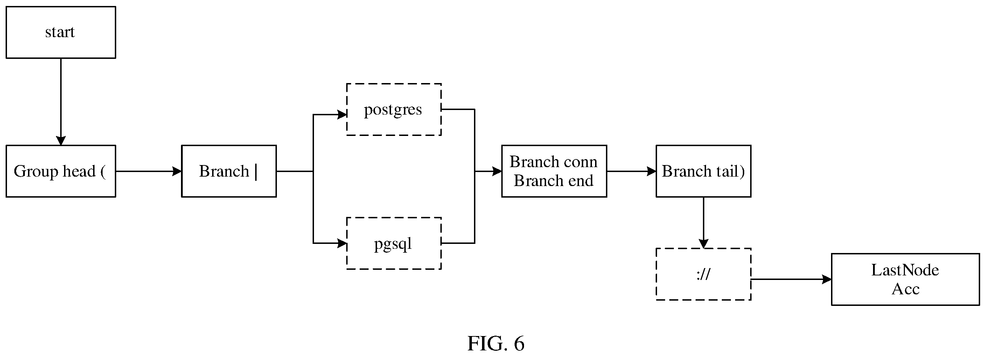

For example, the regular expression 1 is converted into an automaton transition diagram shown in FIG. 6. Refer to FIG. 6. The automaton transition diagram is traversed. Nodes marked by dashed lines are pure string-type nodes. Therefore, the nodes may be used as fixed strings (which may also be referred to as keywords). For example, automatically extracted keywords in the regular expression 2 include "postgres", "pgsql", and *":*//*".*

Optionally, in some embodiments, in this embodiment of this application, a logical relationship between the keywords in the regular expression 2 may be further determined based on the automaton transition diagram shown in FIG. 6. For example, as shown in FIG. 6, keywords between a branch node and a branch end node may be determined as being in an "OR" logical relationship, and other keywords may be determined as being in an "AND" logical relationship. For example, the following keywords in FIG. 6 may be determined as being in the "OR" logical relationship: "postgres" and "pgsql". For another example, the following keywords in FIG. 6 may be determined as being in the "AND" logical relationship: "postgres" and *":*//*";* and "pgsql" and "://"*.*

In this embodiment of this application, a mapping relationship between each keyword in the regular expression 2 and the number of the regular expression 2 may be further established. For example, established mapping relationships include { "postgres", 2}, {"pgsql", 2}, and {"://", 2}.

The foregoing automated keyword extraction algorithm is used. This can automatically and imperceptibly help the user extract the fixed string in each regular expression.

Step 230: Perform secondary manual filtering on the automatically extracted fixed string.

It should be understood that Step 230 is optional.

Optionally, in this embodiment of this application, the user may further perform secondary manual filtering on the automatically extracted fixed string through the UI interface. In other words, the user may perform secondary filtering, through the UI interface, on the fixed string that is in each regular expression and that is extracted according to the automated keyword extraction algorithm.

For example, on the UI interface shown in FIG. 4, "Automatically extracted keywords" is fixed strings that are in each regular expression and that are extracted according to the automated keyword extraction algorithm, and "Keywords selected by user" is a keyword set formed by dragging automatically extracted keyword to a selected column by the user. After finishing selection, the user may tap an "OK" button.

It should be noted that "Keywords selected by user" may be all of "Automatically extracted keywords", or may be some of "Automatically extracted keywords". This is not specifically limited in this embodiment of this application.

Step 240: Establish a trie tree for the fixed string.

For example, if the user performs secondary manual filtering on the automatically extracted fixed string, in this embodiment, a trie tree may be established for the keyword (which may also be referred to as the fixed string) selected by the user. In another example, if the user does not perform secondary manual filtering on the automatically extracted fixed string, in this embodiment, a trie tree may be established for the automatically extracted fixed string.

For ease of description, an example in which the trie tree is established for the automatically extracted fixed string is used below for description.

It should be understood that the trie tree is also referred to as a word search tree, and is of a tree structure. The trie tree is used to collect statistics on, sort, and save a large quantity of strings (but not limited to the strings). Therefore, the trie tree is often used by a search engine to collect statistics on a text word frequency. The trie tree may include a plurality of nodes. A root node does not include characters, and each of the other nodes includes only one character. Characters along a path from the root node to a specific node in the trie tree are connected to form a string corresponding to the node (if the specific node is an end of a string, mark the node), and characters included in all subnodes of each node are different. The trie tree can use a common prefix of strings to reduce a query time. Therefore, unnecessary string comparison can be reduced to a maximum extent, so that query efficiency is high.

The regular expression 1 and the regular expression 2 included in the regular expression group 1 are used as an example. A trie tree (for example, a trie tree 1) is established for the plurality of fixed strings (for example, "add", "addr", "address", "Address", "NO.", "postgres", "pgsql", and "://") that are automatically extracted from the regular expression 1 and the regular expression 2. In other words, the trie tree 1 may include the plurality of fixed strings automatically extracted from the regular expression 1 and the regular expression 2.

It should be noted that, in this embodiment of this application, a logical relationship between the plurality of fixed strings in the regular expression 1 and the regular expression 2 may be further added to a data structure of the trie tree (for example, the trie tree 1).

Step 250: Establish a mapping relationship between the trie tree and the regular expression group 1.

In this embodiment of this application, because the trie tree (for example, the trie tree 1) includes all fixed strings (which may also be referred to as keywords) that are automatically extracted from the regular expression 1 and the regular expression 2 included in the regular expression group 1, there is a one-to-one correspondence between the established trie tree (for example, the trie tree 1) and the regular expression group 1. Therefore, in this embodiment of this application, the following mapping relationship may be established: {trie tree 1, regular expression group 1}.

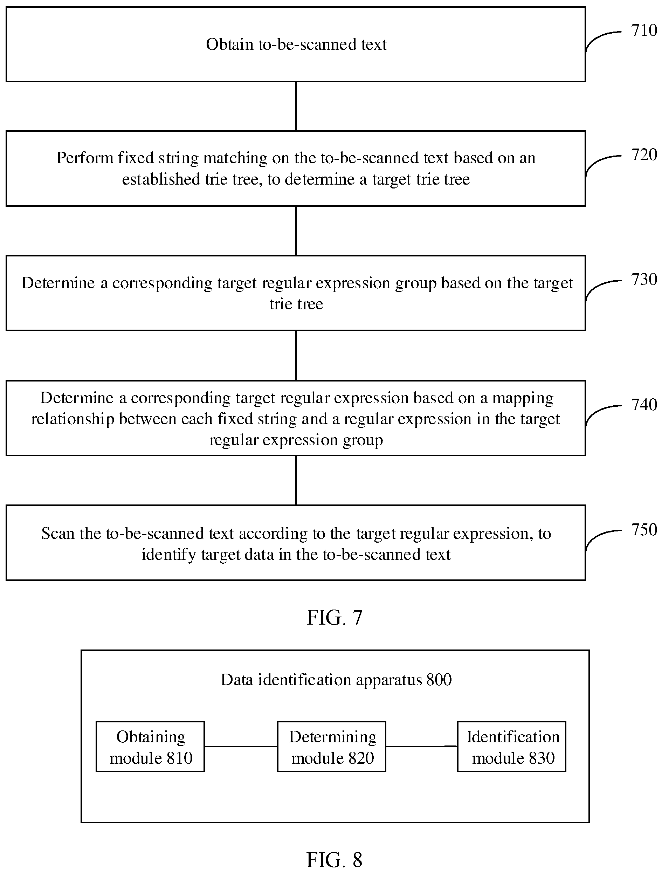

With reference to FIG. 7, the following describes in detail a method for filtering a regular expression based on a trie tree and identifying data according to a filtered regular expression according to an embodiment of this application. It should be understood that an example in FIG. 7 is merely intended to help a person skilled in the art understand embodiments of this application, instead of limiting embodiments of this application to a specific value or a specific scenario of the example shown in FIG. 7. It is clear that a person skilled in the art may make various equivalent modifications or changes based on the following example provided in FIG. 7, and such modifications and changes also fall within the scope of embodiments of this application.

FIG. 7 is a schematic flowchart of the method for identifying the data according to the filtered regular expression according to an embodiment of this application. As shown in FIG. 7, the method may include steps 710 to 750. The following separately describes steps 710 to 750 in detail.

Step 710: Obtain the to-be-scanned text.

Step 720: Perform fixed string matching on the to-be-scanned text based on the established trie tree, to determine a target trie tree.

In this embodiment of this application, after the to-be-scanned text is obtained, fixed string matching and query may be performed on the to-be-scanned text based on one or more established trie trees, to determine the target trie tree. Specifically, if a specific fixed string in the to-be-scanned text is located in a specific trie tree, the trie tree may be determined as the target trie tree.

For example, it is assumed that the to-be-scanned text includes the fixed string "Address". Because the trie tree (for example, the trie tree 1) corresponding to the regular expression group 1 includes the fixed string "Address", the trie tree 1 may be determined as the target trie tree.

Step 730: Determine a corresponding target regular expression group based on the target trie tree.

In this embodiment of this application, the target regular expression group corresponding to the target trie tree may be further determined based on the mapping relationship between the trie tree and the regular expression group. For example, the trie tree 1 is the target trie tree. It may be determined, based on the mapping relationship {trie tree 1, regular expression group 1}, that the target regular expression group corresponding to the target trie tree is the regular expression group 1.

Step 740: Determine a corresponding target regular expression based on a mapping relationship between each fixed string and a regular expression in the target regular expression group.

In this embodiment of this application, the regular expression corresponding to the to-be-scanned text may be further determined based on the mapping relationship between each fixed string and the regular expression in the regular expression group 1. To be specific, the plurality of regular expressions included in the regular expression group 1 are filtered based on the fixed string in the to-be-scanned text and the mapping relationship between each fixed string and the regular expression in the regular expression group 1, to obtain the target regular expression.

For example, the to-be-scanned text includes the fixed string "Address". In this embodiment of this application, it may be determined, based on the mapping relationship { "Address", 1}, that the target regular expression is the regular expression 1 numbered 1. Therefore, the regular expression 1 may be used as the target regular expression.

Step 750: Scan the to-be-scanned text according to the target regular expression, to identify target data in the to-be-scanned text.

In this embodiment of this application, after the target regular expression is obtained through filtering from the plurality of regular expressions included in the regular expression group 1, the to-be-scanned text may be scanned according to the target regular expression, to identify the target data in the to-be-scanned text. For example, the target regular expression is the regular expression 1 numbered 1 in the regular expression group 1. The to-be-scanned text may be scanned according to the regular expression 1 in the regular expression group 1, to identify the target data in the to-be-scanned text.

In the foregoing technical solution, the target regular expression is obtained, through filtering, from the plurality of regular expressions included in the target regular expression group, and the target data in the to-be-scanned text is identified according to the target regular expression. In this way, a speed and efficiency of identifying the target data in the to-be-scanned data can be improved without compromising target data matching accuracy.

The foregoing describes in detail the method provided in embodiments of this application with reference to FIG. 1 to FIG. 7. The following describes in detail apparatus embodiments in this application with reference to FIG. 8 to FIG. 11. It should be understood that the descriptions of the method embodiments correspond to descriptions of the apparatus embodiments. Therefore, for a part that is not described in detail, refer to the foregoing method embodiments.

FIG. 8 is a block diagram of a data identification apparatus 800 according to an embodiment of this application. The apparatus 800 may be implemented by using software, hardware, or a combination of software and hardware. The apparatus 800 provided in this embodiment of this application may implement the method procedure shown in FIG. 2 or FIG. 7 in embodiments of this application. The apparatus 800 includes:
an obtaining module 810, a determining module 820, and an identification module 830, where the obtaining module 810 is configured to obtain to-be-scanned data; the determining module 820 is configured to: query the to-be-scanned data based on a first trie tree, to determine a first string, and determine a first regular expression from a target regular expression group based on the first string and a first mapping relationship; the identification module 830 is configured to scan the to-be-scanned data according to the first regular expression, to identify target data in the to-be-scanned data; and the first trie tree and the to-be-scanned data include the first string, the first trie tree corresponds to the target regular expression group, the target regular expression group includes a plurality of regular expressions, the first mapping relationship includes a mapping relationship between the first string and the first mapping relationship, and the first regular expression is one of the plurality of regular expressions.

Optionally, the determining module 820 is further configured to determine the target regular expression group based on the first trie tree and a second mapping relationship, where the second mapping relationship includes a mapping relationship between the first trie tree and the target regular expression group.

Optionally, the determining module 820 is further configured to: determine the target regular expression group based on the to-be-scanned data, and establish the first trie tree corresponding to the target regular expression group.

Optionally, the target regular expression group includes the first regular expression, and the determining module 820 is specifically configured to: automatically extract a string in the first regular expression, where the string in the first regular expression includes the first string; and establish the first trie tree based on the string in the first regular expression.

Optionally, the determining module is specifically configured to: establish a first automaton transition diagram corresponding to the first regular expression; and automatically extract the string in the first regular expression based on the first automaton transition diagram.

Optionally, the determining module 820 is further configured to establish the first mapping relationship between the first string and the first regular expression.

Optionally, the determining module 820 is further configured to establish the second mapping relationship between the first trie tree and the target regular expression group.

Optionally, the target regular expression group further includes a second regular expression. The determining module 820 is specifically configured to: automatically extract a string in the second regular expression, where the string in the second regular expression includes a second string; and establish the first trie tree based on the string in the second regular expression.

Optionally, the determining module 820 is further configured to establish a third mapping relationship between the second string and the second regular expression.

Optionally, the obtaining module 810 is specifically configured to receive a user instruction, where the user instruction indicates the target regular expression group selected for the to-be-scanned data.

The apparatus 800 herein may be embodied in a form of functional module. The term "module" herein may be implemented in a form of software and/or hardware. This is not specifically limited.

For example, the "module" may be a software program, a hardware circuit, or a combination thereof that implements the foregoing functions. For example, the following uses the obtaining module 810 as an example to describe an implementation of the obtaining module 810. Similarly, for an implementation of another module, for example, the determining module 820 or the identification module 830, refer to the implementation of the obtaining module 810.

The obtaining module 810 is as an example of a software functional unit, and the obtaining module 810 may include code that is run on a computing instance. The computing instance may include at least one of a physical host (a computing device), a virtual machine, and a container. Further, there may be one or more computing instances. For example, the obtaining module 810 may include code that is run on a plurality of hosts/virtual machines/containers. It should be noted that the plurality of hosts/virtual machines/containers configured to run the code may be distributed in a same region (region), or may be distributed in different regions. Further, the plurality of hosts/virtual machines/containers configured to run the code may be distributed in a same availability zone (availability zone, AZ), or may be distributed in different AZs. Each AZ includes one data center or a plurality of data centers that are geographically close to each other. Usually, one region may include a plurality of AZs.

Similarly, the plurality of hosts/virtual machines/containers configured to run the code may be distributed in a same virtual private cloud (virtual private cloud, VPC), or may be distributed in a plurality of VPCs. Usually, one VPC is configured in one region. For cross-region communication between two VPCs in a same region and between VPCs in different regions, a communication gateway needs to be configured in each of the VPCs, and interconnection between the VPCs is implemented through the communication gateway.

The obtaining module 810 is used as an example of a hardware functional unit, and the obtaining module 810 may include at least one computing device such as a server. Alternatively, the obtaining module 810 may be a device implemented by an application-specific integrated circuit (application-specific integrated circuit, ASIC), a programmable logic device (programmable logic device, PLD), or the like. The PLD may be implemented by a complex programmable logic device (complex programmable logic device, CPLD), a field-programmable gate array (field-programmable gate array, FPGA), generic array logic (generic array logic, GAL), or any combination thereof.

A plurality of computing devices included in the obtaining module 810 may be distributed in a same region, or may be distributed in different regions. The plurality of computing devices included in the obtaining module 810 may be distributed in a same AZ, or may be distributed in different AZs. Similarly, the plurality of computing devices included in the obtaining module 810 may be distributed in a same VPC, or may be distributed in a plurality of VPCs. The plurality of computing devices may be any combination of computing devices such as a server, an ASIC, a PLD, a CPLD, an FPGA, and a GAL.

Therefore, modules in the examples described in embodiments of this application can be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It should be noted that, when the apparatus provided in the foregoing embodiment performs the foregoing method, division into the foregoing functional modules is merely used as an example for description. During actual application, the foregoing functions may be allocated as required to different functional modules for implementation, that is, an internal structure of the apparatus is divided into different functional modules to implement all or some of the functions described above. For example, the obtaining module 810 may be configured to perform any step in the foregoing method, the determining module 820 may be configured to perform any step in the foregoing method, and the identification module 830 may be configured to perform any step in the foregoing method. Steps implemented by the obtaining module 810, the determining module 820, and the identification module 830 may be specified as required. The obtaining module 810, the determining module 820, and the identification module 830 implement different steps in the foregoing method respectively, to implement all functions of the foregoing apparatus.

In addition, the apparatus embodiments and the method embodiments provided in the foregoing embodiments belong to a same concept. For specific implementation processes thereof, refer to the method embodiments. Details are not described herein again.

The method provided in embodiments of this application may be performed by a computing device. The computing device may also be referred to as a computer system, including a hardware layer, an operating system layer running above the hardware layer, and an application layer running above the operating system layer. The hardware layer includes hardware such as a processing unit, a memory, and a memory control unit. A function and a structure of the hardware are subsequently described in detail. An operating system is any one or more types of computer operating systems that implement service processing through a process (process), for example, a Linux operating system, a Unix operating system, an Android operating system, an iOS operating system, or a Windows operating system. The application layer includes applications such as Browser, Contacts, word processing software, and instant messaging software. In addition, optionally, the computer system is a handheld device such as a smartphone, or a terminal device such as a personal computer. This is not particularly limited in this application, provided that the method provided in embodiments of this application can be implemented. The method provided in embodiments of this application may be performed by the computing device or a functional module that is in the computing device and that can invoke and execute a program.

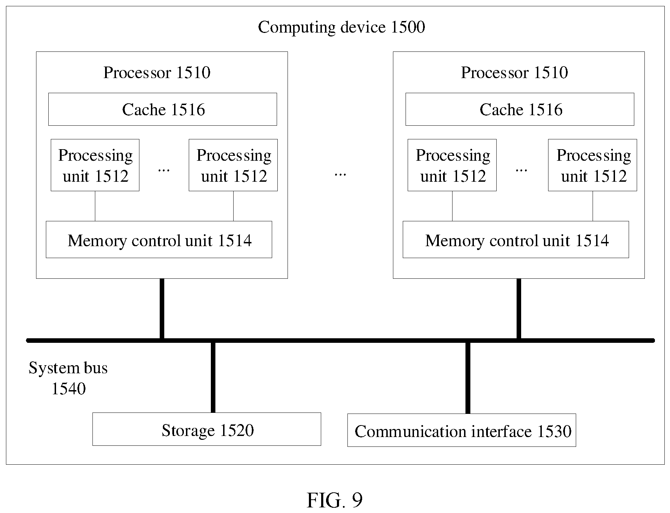

The following describes in detail with reference to FIG. 9, a computing device provided in an embodiment of this application.

FIG. 9 is a diagram of an architecture of the computing device 1500 according to an embodiment of this application. The computing device 1500 may be a server, a computer, or another device with a computing capability. The computing device 1500 shown in FIG. 9 includes at least one processor 1510 and a storage 1520.

It should be understood that a quantity of processors and a quantity of storages in the computing device 1500 are not limited in this application.

The processor 1510 executes instructions in the storage 1520, so that the computing device 1500 implements the method provided in this application. Alternatively, the processor 1510 executes instructions in the storage 1520, so that the computing device 1500 implements functional modules provided in this application to implement the method provided in this application.

Optionally, the computing device 1500 further includes a communication interface 1530. The communication interface 1530 implements communication between the computing device 1500 and another device or a communication network by using a transceiver module, for example but not limited to a network interface card or a transceiver.

Optionally, the computing device 1500 further includes a system bus 1540. The processor 1510, the storage 1520, and the communication interface 1530 are separately connected to the system bus 1540. The processor 1510 can access the storage 1520 through the system bus 1540. For example, the processor 1510 can read and write data or execute code in the storage 1520 through the system bus 1540. The system bus 1540 is a peripheral component interconnect express (peripheral component interconnect express, PCI) bus, an extended industry standard architecture (extended industry standard architecture, EISA) bus, or the like. The system bus 1540 is classified into an address bus, a data bus, a control bus, and the like. For ease of representation, only one bold line is used to represent the bus in FIG. 9, but this does not mean that there is only one bus or only one type of bus.

In a possible implementation, a function of the processor 1510 is mainly to interpret instructions (or code) of a computer program and process data in computer software. The instructions of the computer program and the data in the computer software can be stored in the storage 1520 or a cache 1516.

Optionally, the processor 1510 may be an integrated circuit chip and has a signal processing capability. By way of example rather than limitation, the processor 1510 is a general-purpose processor, a digital signal processor (digital signal processor, DSP), an application-specific integrated circuit (application specific integrated circuit, ASIC), a field programmable gate array (field programmable gate array, FPGA) or another programmable logic device, a discrete gate or transistor logic device, or a discrete hardware component. The general-purpose processor is a microprocessor or the like. For example, the processor 1510 is a central processing unit (central processing unit, CPU).

Optionally, each processor 1510 includes at least one processing unit 1512 and a memory control unit 1514.

Optionally, the processing unit 1512 is also referred to as a core (core) or a kernel, and is the most important component of the processor. The processing unit 1512 is made of monocrystalline silicon through a specific production process. All computing, command acceptance, command storage, and data processing of the processor are executed by the core. The processing unit independently runs program instructions, and increases a running speed of a program by using a parallel computing capability. Various processing units have fixed logical structures. For example, the processing unit includes logical units such as a level 1 cache, a level 2 cache, an execution unit, an instruction level unit, and a bus interface.

In an implementation example, the memory control unit 1514 is configured to control data exchange between the storage 1520 and the processing unit 1512. Specifically, the memory control unit 1514 receives a memory access request from the processing unit 1512, and controls access to the memory based on the memory access request. By way of example rather than limitation, the memory control unit is a component such as a memory management unit (memory management unit, MMU).

In an implementation example, each memory control unit 1514 performs addressing for the storage 1520 through the system bus. In addition, an arbiter (not shown in FIG. 9) is configured in the system bus, and the arbiter is responsible for processing and coordinating contention-based access of a plurality of processing units 1512.

In an implementation example, the processing unit 1512 and the memory control unit 1514 are communicatively connected through a connection line such as an address line in a chip, to implement communication between the processing unit 1512 and the memory control unit 1514.

Optionally, each processor 1510 further includes a cache 1516, and the cache is a data exchange buffer (referred to as a cache). When the processing unit 1512 needs to read data, the processing unit 1512 may first search for the required data from the cache. If the data is found, the processing unit 1512 directly reads the data. If the data is not found, the processing unit 1512 searches for the data from the storage. Because the cache runs much faster than the storage, a function of the cache is to help the processing unit 1512 run faster.

The storage 1520 can provide running space for a process in the computing device 1500. For example, the storage 1520 stores a computer program (specifically, program code) used to generate the process. After the computer program is run by the processor to generate the process, the processor allocates corresponding storage space to the process in the storage 1520. Further, the storage space further includes a text segment, an initial data segment, an uninitialized data segment, a stack segment, a heap segment, and the like. The storage 1520 stores, in the storage space corresponding to the process, data generated during running of the process, for example, intermediate data or process data.

Optionally, the storage is also referred to as a memory, and a function of the storage is to temporarily store operation data in the processor 1510 and data exchanged with an external memory such as a hard disk. Provided that the computer runs, the processor 1510 may schedule, to the memory for an operation, data on which the operation needs to be performed, and the processing unit 1512 sends a result after the operation is completed.

By way of example rather than limitation, the storage 1520 is a volatile memory or a nonvolatile memory, or may include both a volatile memory and a nonvolatile memory. The nonvolatile memory is a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory is a random access memory (random access memory, RAM), and is used as an external cache. Through example but not limitative description, a plurality of forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that storages 1520 of the systems and methods described in this specification are intended to include but are not limited to these storages and any storage of another proper type.

The listed structure of the computing device 1500 is merely an example for description, and this application is not limited thereto. The computing device 1500 in this embodiment of this application includes various types of hardware in a computer system in the conventional technology. For example, the computing device 1500 further includes a storage other than the storage 1520, for example, a magnetic disk storage. A person skilled in the art should understand that the computing device 1500 may further include another component required for implementing normal running. In addition, a person skilled in the art should understand that, according to a specific requirement, the computing device 1500 may further include a hardware component for implementing another additional function. Moreover, a person skilled in the art should understand that the computing device 1500 may alternatively include only a component required for implementing embodiments of this application, and do not necessarily include all the components shown in FIG. 9.

An embodiment of this application further provides a computing device cluster. The computing device cluster includes at least one computing device. The computing device may be a server. In some embodiments, the computing device may alternatively be a terminal device, for example, a desktop computer, a notebook computer, or a smartphone.

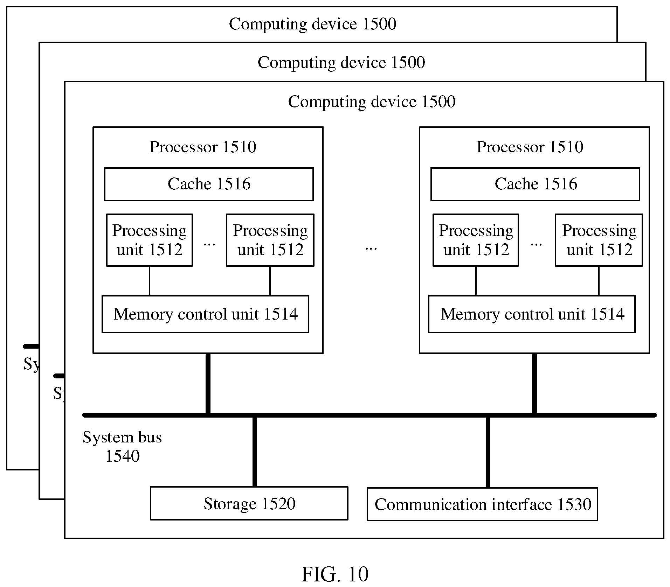

As shown in FIG. 10, the computing device cluster includes at least one computing device 1500. Storages 1520 in one or more computing devices 1500 in the computing device cluster may store same instructions used to perform the foregoing method.

In some possible implementations, the storages 1520 in the one or more computing devices 1500 in the computing device cluster may alternatively store some instructions used to perform the foregoing method separately. In other words, a combination of the one or more computing devices 1500 may jointly execute the instructions of the foregoing method.

It should be noted that storages 1520 in different computing devices 1500 in the computing device cluster may store different instructions respectively used to perform some functions of the foregoing apparatus. In other words, the instructions stored in the storages 1520 in different computing devices 1500 may implement functions of one or more modules in the foregoing apparatus.

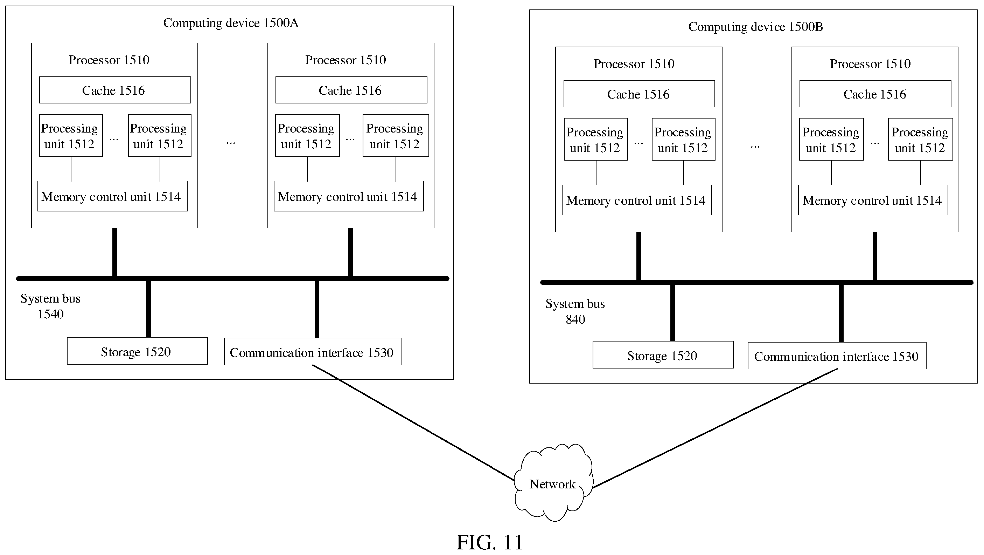

In some possible implementations, the one or more computing devices in the computing device cluster may be connected through a network. The network may be a wide area network, a local area network, or the like. FIG. 11 shows a possible implementation. As shown in FIG. 11, two computing devices 1500A and 1500B are connected through the network. Specifically, each computing device is connected to the network through a communication interface in the computing device.

It should be understood that functions of the computing device 1500A shown in FIG. 11 may alternatively be implemented by a plurality of computing devices 1500. Similarly, functions of the computing device 1500B may alternatively be implemented by a plurality of computing devices 1500.

An embodiment further provides a computer program product including instructions. The computer program product may be software or a program product that includes the instructions and that can run on a computing device or be stored in any usable medium. When the computer program product runs on the computing device, the computing device is enabled to perform the method provided above, or the computing device is enabled to implement functions of the apparatus provided above.

An embodiment further provides a computer program product including instructions. The computer program product may be software or a program product that includes the instructions and that can run on a computing device cluster or be stored in any usable medium. When the computer program product runs on the computing device cluster, the computing device cluster is enabled to perform the method provided above, or the computing device cluster is enabled to implement functions of the apparatus provided above.

An embodiment further provides a computer-readable storage medium. The computer-readable storage medium may be any usable medium that can be stored by a computing device, or a data storage device such as a data center, including one or more usable media. The usable medium may be a magnetic medium (for example, a floppy disk, a hard disk drive, or a magnetic tape), an optical medium (for example, a DVD), a semiconductor medium (for example, a solid-state drive), or the like. The computer-readable storage medium includes instructions. When the instructions in the computer-readable storage medium are executed on the computing device, the computing device is enabled to perform the method provided above.

An embodiment further provides a computer-readable storage medium. The computer-readable storage medium may be any usable medium that can be stored by a computing device, or a data storage device such as a data center, including one or more usable media. The usable medium may be a magnetic medium (for example, a floppy disk, a hard disk drive, or a magnetic tape), an optical medium (for example, a DVD), a semiconductor medium (for example, a solid-state drive), or the like. The computer-readable storage medium includes instructions. When the instructions in the computer-readable storage medium are executed by a computing device cluster, the computing device cluster is enabled to perform the method provided above.

It should be understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in another manner. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual requirements to achieve the objectives of the solutions of embodiments.

In addition, functional units in embodiments of this application may be integrated into one processing unit, each of the units may exist alone physically, or two or more units are integrated into one unit.

When the functions are implemented in a form of software functional unit and sold or used as an independent product, the functions may be stored in a computer-readable storage medium. Based on such an understanding, the technical solutions of this application essentially, or the part contributing to the conventional technology, or some of the technical solutions may be implemented in a form of software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A data identification method, wherein the method is applied to a cloud management platform, and the method comprises:
obtaining, by the cloud management platform, to-be-scanned data;
querying, by the cloud management platform, the to-be-scanned data based on a first trie tree, to determine a first string, wherein the first trie tree and the to-be-scanned data comprise the first string, the first trie tree corresponds to a target regular expression group, and the target regular expression group comprises a plurality of regular expressions;
determining, by the cloud management platform, a first regular expression from the target regular expression group based on the first string and a first mapping relationship, wherein the first mapping relationship comprises a mapping relationship between the first string and the first mapping relationship, and the first regular expression is one of the plurality of regular expressions; and
scanning, by the cloud management platform, the to-be-scanned data according to the first regular expression, to identify target data in the to-be-scanned data.

2. The method according to claim 1, wherein before determining, by the cloud management platform, the first regular expression from the target regular expression group based on the first string and the first mapping relationship, the method further comprises:
determining, by the cloud management platform, the target regular expression group based on the first trie tree and a second mapping relationship, wherein the second mapping relationship comprises a mapping relationship between the first trie tree and the target regular expression group.

3. The method according to claim 1 or 2, wherein the method further comprises:
determining, by the cloud management platform, the target regular expression group based on the to-be-scanned data; and
establishing, by the cloud management platform, the first trie tree corresponding to the target regular expression group.

4. The method according to claim 3, wherein the target regular expression group comprises the first regular expression; and
establishing, by the cloud management platform, the first trie tree corresponding to the target regular expression group comprises:
automatically extracting, by the cloud management platform, a string in the first regular expression, wherein the string in the first regular expression comprises the first string; and
establishing, by the cloud management platform, the first trie tree based on the string in the first regular expression.

5. The method according to claim 4, wherein automatically extracting, by the cloud management platform, the string in the first regular expression comprises:
establishing, by the cloud management platform, a first automaton transition diagram corresponding to the first regular expression; and
automatically extracting, by the cloud management platform, the string in the first regular expression based on the first automaton transition diagram.

6. The method according to claim 4 or 5, wherein the method further comprises:
establishing, by the cloud management platform, the first mapping relationship between the first string and the first regular expression.

7. The method according to any one of claims 4 to 6, wherein the method further comprises:
establishing, by the cloud management platform, the second mapping relationship between the first trie tree and the target regular expression group.

8. The method according to any one of claims 3 to 7, wherein the target regular expression group further comprises a second regular expression; and
establishing, by the cloud management platform, the first trie tree corresponding to the target regular expression group comprises:
automatically extracting, by the cloud management platform, a string in the second regular expression, wherein the string in the second regular expression comprises a second string; and
establishing, by the cloud management platform, the first trie tree based on the string in the second regular expression.

9. The method according to claim 8, wherein the method further comprises:
establishing, by the cloud management platform, a third mapping relationship between the second string and the second regular expression.

10. The method according to any one of claims 3 to 9, wherein determining, by the cloud management platform, the target regular expression group based on the to-be-scanned data comprises:
receiving, by the cloud management platform, a user instruction, wherein the user instruction indicates the target regular expression group selected for the to-be-scanned data.

11. A data identification apparatus, wherein the apparatus is used in a cloud management platform, and the apparatus comprises:
an obtaining module, configured to obtain to-be-scanned data;
a determining module, configured to query the to-be-scanned data based on a first trie tree, to determine a first string, wherein the first trie tree and the to-be-scanned data comprise the first string, the first trie tree corresponds to a target regular expression group, and the target regular expression group comprises a plurality of regular expressions, wherein
the determining module is further configured to determine a first regular expression from the target regular expression group based on the first string and a first mapping relationship, wherein the first mapping relationship comprises a mapping relationship between the first string and the first mapping relationship, and the first regular expression is one of the plurality of regular expressions; and
an identification module, configured to scan the to-be-scanned data according to the first regular expression, to identify target data in the to-be-scanned data.

12. The apparatus according to claim 11, wherein
the determining module is further configured to determine the target regular expression group based on the first trie tree and a second mapping relationship, wherein the second mapping relationship comprises a mapping relationship between the first trie tree and the target regular expression group.

13. The apparatus according to claim 11 or 12, wherein
the determining module is further configured to determine the target regular expression group based on the to-be-scanned data; and
the determining module is further configured to establish the first trie tree corresponding to the target regular expression group.

14. The apparatus according to claim 13, wherein the target regular expression group comprises the first regular expression, and the determining module is specifically configured to:
automatically extract a string in the first regular expression, wherein the string in the first regular expression comprises the first string; and
establish the first trie tree based on the string in the first regular expression.

15. The apparatus according to claim 14, wherein the determining module is specifically configured to:
establish a first automaton transition diagram corresponding to the first regular expression; and
automatically extract the string in the first regular expression based on the first automaton transition diagram.

16. The apparatus according to claim 15, wherein
the determining module is further configured to establish the first mapping relationship between the first string and the first regular expression.

17. The apparatus according to any one of claims 14 to 16, wherein
the determining module is further configured to establish the second mapping relationship between the first trie tree and the target regular expression group.

18. The apparatus according to any one of claims 13 to 17, wherein the target regular expression group further comprises a second regular expression, and the determining module is specifically configured to:
automatically extract a string in the second regular expression, wherein the string in the second regular expression comprises a second string; and
establish the first trie tree based on the string in the second regular expression.

19. The apparatus according to claim 18, wherein
the determining module is further configured to establish a third mapping relationship between the second string and the second regular expression.

20. The apparatus according to any one of claims 13 to 19, wherein the obtaining module is specifically configured to:
receive a user instruction, wherein the user instruction indicates the target regular expression group selected for the to-be-scanned data.

21. A computing device, comprising a processor and a storage, wherein the processor is configured to execute instructions stored in the storage, to enable the computing device to perform the method according to any one of claims 1 to 10.

22. A computing device cluster, comprising at least one computing device, wherein each computing device comprises a processor and a storage; and
the processor of the at least one computing device is configured to execute instructions stored in the storage of the at least one computing device, to enable the computing device cluster to perform the method according to any one of claims 1 to 10.

23. A computer program product comprising instructions, wherein when the instructions are run by a computing device, the computing device is enabled to perform the method according to any one of claims 1 to 10.

24. A computer program product comprising instructions, wherein when the instructions are run by a computing device cluster, the computing device cluster is enabled to perform the method according to any one of claims 1 to 10.

25. A computer-readable storage medium, comprising computer program instructions, wherein when the computer program instructions are executed by a computing device, the computing device performs the method according to any one of claims 1 to 10.

26. A computer-readable storage medium, comprising computer program instructions, wherein when the computer program instructions are executed by a computing device cluster, the computing device cluster performs the method according to any one of claims 1 to 10.
